# EUROPEAN PATENT APPLICATION

(11) **EP 4 793 457 A1**
(43) Date of publication of application: **19.08.2026**
(21) Application number: 25157824.1
(22) Date of filing: 13.02.2025
(51) Int. Cl.: E21B 27/00, E21B 37/00

(54) **WIRELINE CLEANING TOOL**

(71) Applicant: Welltec A/S, 3450 Allerød (DK)
(72) Inventor: ANDERSEN, Tomas Sune, 3450 Allerød (DK)
(74) Representative: Dragsted Partners A/S

(57) **Abstract**

The present invention relates to a wireline cleaning tool for collecting elements such as debris, shavings or other elements from a well fluid in a well, comprising a first electric motor powered through a wireline, a milling or drilling head comprising at least one inlet, a pump rotated by the first electric motor for providing a suction of well fluid containing elements, such as debris or shavings, in through the inlet, a chamber fluidly connected with the inlet for receiving the well fluid and for collecting elements in the well fluid, and a filtering device arranged for filtering the elements from the well fluid before the fluid passes through an outlet of the tool, wherein the wireline cleaning tool further comprises a second electric motor for rotating the milling or drilling head. The invention also relates to a downhole tool string comprising the wireline cleaning tool and a driving unit/downhole tractor, as well as a method of controlling a wireline cleaning tool.

## Description

The present invention relates to a wireline cleaning tool for collecting elements such as debris, shavings or other elements from a well fluid in a well. The invention also relates to a downhole tool string comprising the wireline cleaning tool and a driving unit/downhole tractor, as well as a method of controlling a wireline cleaning tool.

When tools are run on wireline for performing an operation in a well downhole, the power is limited compared to coiled-tubing or drill-pipe-operated tools, and the power is to be used more carefully when more than one component in the tool needs power. The limited power may limit the use of the wireline tools, especially when drilling or milling into objects of varying hardness as the wireline tools have limited power.

It is an object of the present invention to wholly or partly overcome the above disadvantages and drawbacks of the prior art. More specifically, it is an object to provide an improved wireline cleaning tool which is able to drill or mill into objects of varying hardness while being able to collect the elements created by the milling or drilling operation.

The above objects, together with numerous other objects, advantages and features, which will become evident from the below description, are accomplished by a solution in accordance with the present invention of a wireline cleaning tool for collecting elements such as debris, shavings or other elements from a well fluid in a well, comprising:
- a first electric motor powered through a wireline,
- a milling or drilling head comprising at least one inlet,
- a pump rotated by the first electric motor for providing a suction of well fluid containing elements, such as debris or shavings, in through the inlet,
- a chamber fluidly connected with the inlet for receiving the well fluid and for collecting elements in the well fluid, and
- a filtering device arranged for filtering the elements from the well fluid before the fluid passes through an outlet of the tool,
wherein the wireline cleaning tool further comprises a second electric motor for rotating the milling or drilling head.

With one motor for driving the pump and one motor for rotating the milling or drilling head, the power can easily be optimised between the pump suction and the head rotation. The motors can thus be run independently of each other, which increases the flexibility of the tool substantially. The first electric motor may be activated to drive the pump while the second electric motor is not activated or kept in idle position. When drilling or milling is carried out in a well, the outermost layer of an obstacle or debris may be harder than an inner layer, and in such case the milling or drilling head needs more force in order to penetrate the harder layer while there are only few torn-off elements in the well fluid, and thus the power is distributed to drive the second electric motor to rotate the milling or drilling head. As the milling or drilling head penetrates the first harder layer, the power distribution is changed so that the first motor receives power or more power to increase the suction so as to collect more elements in the chamber.

Moreover, the first electric motor may comprise a first shaft connected with the pump, and the second electric motor may comprise a second shaft connected with the milling or drilling head.

Also, the first shaft and the second shaft may be coaxially arranged and rotate independently of each other.

Furthermore, the first shaft may be tubular, and the second shaft may extend through the first shaft.

In addition, the wireline cleaning tool may further comprise a gear section connected with the second shaft for reducing a first rotational speed of the second shaft to rotate the head at a second rotational speed that is lower than the first rotational speed.

Also, the second shaft may have a higher strength than the first shaft.

Moreover, the first motor may be arranged closest to the wireline, and the first shaft may extend through the second motor.

Further, the gear may be arranged between the second motor and the pump.

In addition, the second motor may abut the first motor.

Furthermore, the second first shaft section may be tubular, and the second shaft may extend through the second first shaft section.

Also, the first shaft may comprise a first first shaft section and a second first shaft section, the first first shaft section being connected to the first motor, and the second first shaft section being rotated by the first first shaft section via a gear connection transferring the rotation of the first first shaft section to the second first shaft section.

Moreover, the gear connection may transfer the rotation of the first first shaft section to the second first shaft section via a shaft connection.

Further, the second shaft may comprise a first second shaft section extending from the second motor rotating at the first rotational speed and a second second shaft section extending as output of the gear section rotating at the second rotational speed.

In addition, the first second shaft section may be connected to the second second shaft section.

Furthermore, the second motor may be arranged closest to the wireline, and the second shaft may extend through the first motor.

Also, the gear may be arranged between the second motor and the first motor.

Moreover, the pump may abut the first motor.

Further, the first shaft may be tubular. and the second shaft may extend through the first shaft.

Further, the gear section may comprise a multi-stage gear.

Moreover, the second shaft extending from the second motor rotating a the first rotational speed may be a first second shaft part, and the output shaft of the gear section may be a second second shaft part rotating at the second rotational speed.

Also, the filtering device may be arranged in the chamber.

Furthermore, the filtering device may rotate.

In addition, the filtering device may be connected with the second shaft in a first device end, and the filtering device may be connected with the milling or drilling head at a second device end.

Thus, the filtering device may form part of the second shaft.

Further, the filtering device may be stationary and may be connected with the chamber.

Moreover, the filtering device may be tubular, and the second shaft may extend through the filtering device.

Also, the second shaft may be formed of several shaft sections.

Furthermore, the first shaft may be formed of several shaft sections.

In addition, the wireline cleaning tool may further comprise a valve in fluid communication with a chamber inlet of the chamber, preventing the fluid from flowing back through the inlet.

Further, the wireline cleaning tool may also comprise a first sensor for measuring a current demand of the first motor and a second sensor for measuring a current demand of the second motor.

Moreover, the wireline cleaning tool may further comprise a control unit receiving input from the first sensor and the second sensor for controlling the power distribution to the first motor and the second motor.

Also, the wireline cleaning tool may have a first tool end part connected to the wireline and a second tool end part, and the milling or drilling head may be arranged in the second tool end part.

Furthermore, the pump may be a centrifugal pump.

In addition, the centrifugal pump may include at least one of a mixed flow impeller, a radial flow impeller and a helico-axial impeller.

Further, the pump may comprise a pump inlet in fluid communication with a chamber outlet downstream of the filtering device.

Moreover, there may be a one-way valve in the chamber outlet.

Also, the chamber may be a collection chamber.

Furthermore, a connection assembly may be arranged between the milling or drilling head and the second shaft.

In addition, the milling or drilling head may rotate in relation to the chamber and the chamber inlet.

Further, the tool may comprise several chambers arranged in connection with each other.

Moreover, the tool may comprise bearings arranged between rotating and stationary parts.

Also, the wireline cleaning tool may further comprise a compensator for pressurising an inside of the tool with a higher pressure than a surrounding pressure.

Furthermore, the compensator may comprise a spring for providing the higher pressure in the tool than the surrounding pressure.

In addition, the compensator may comprise a compensator piston arranged in a compensator chamber, dividing the compensator chamber into a first compensator chamber part and a second compensator chamber part, where the first compensator chamber part is in fluid communication with the inside of the tool, and the second compensator chamber part is in fluid communication with an opening in the tool for allowing well fluid in and out of the second compensator chamber part.

Further, the compensation fluid may flow past the gear section in a channel.

Moreover, the compensation fluid may flow in a centre channel in the gear section or in an annular channel circumferenting the gear section.

The invention also relates to a downhole tool string comprising the wireline cleaning tool and a driving unit/downhole tractor.

Furthermore, the driving unit/downhole tractor may comprise a plurality of wheels on projectable arms.

In addition, the tool may comprise a second pump driven by a third motor for powering the driving unit/downhole tractor.

Further, the tool may also comprise an electrical module.

Moreover, the filtering device (rotating) may comprise at least one blade, which may be helical, on its outer face to aid the elements accumulating in the chamber towards the chamber end at the pump.

Finally, the invention relates to a method of controlling a wireline cleaning tool, comprising:
- lowering the wireline cleaning tool into a well,
- activating at least one of the first electric motor and the second electric motor,
- measuring a power demand, such as a current, in the first electric motor and the second electric motor, and
- changing the power to one of the first electric motor and the second electric motor based on the measured power demand.

Also, the method may further comprise changing the power distribution in a predetermined pattern based on the measured power demand

The invention and its many advantages will be described in more detail below with reference to the accompanying schematic drawings, which for the purpose of illustration show some non-limiting embodiments and in which:
Fig. 1 shows a wireline cleaning tool having a machining head, such as a milling or drilling head, for loosening elements, such as debris in the well, or milling or drilling into an object in the well, creating shavings, and a collection chamber for collecting the debris or shavings,
Fig. 2 shows another wireline cleaning tool that is part of a downhole tool string,
Fig. 3 is a cross-sectional view of part of another wireline cleaning tool where the filtering device in the chamber forms part of the second shaft rotating the milling or drilling head,
Fig. 4 is a cross-sectional view of part of another wireline cleaning tool where the second shaft extends through the filtering device in the chamber for rotating the milling or drilling head,
Fig. 5 shows a partly cross-sectional view of an illustration for disclosing the interaction between the first and second shafts in one embodiment, and
Fig. 6 shows a partly cross-sectional view of an illustration for disclosing the interaction between the first and second shafts in another embodiment.

All the figures are highly schematic and not necessarily to scale, and they show only those parts which are necessary to elucidate the invention, other parts being omitted or merely suggested.

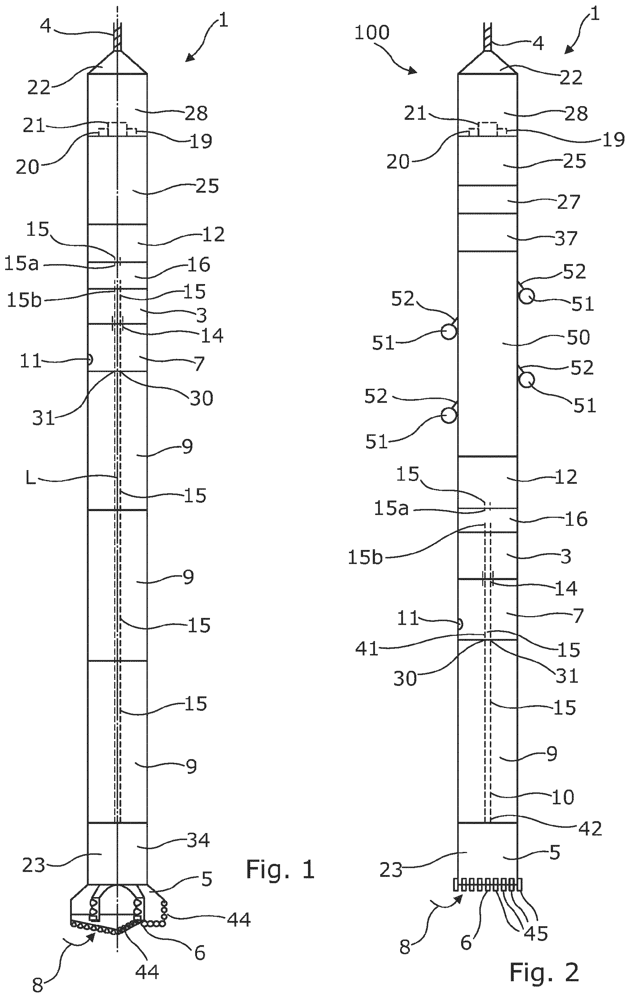

Fig. 1 shows a wireline cleaning tool 1 for collecting elements 2 such as debris, shavings or other elements from a well fluid 8 in a well while milling or drilling for loosening or machining is carried out, which creates such elements 2. The wireline cleaning tool 1 comprises a first electric motor 3 powered through a wireline 4 which is connected to a first tool end part 22 of the wireline cleaning tool 1, and a milling or drilling head 5 is arranged in a second tool end part 23. The milling or drilling head 5 comprises at least one inlet 6 being a tool inlet 6. The wireline cleaning tool 1 further comprises a pump 7 rotated by the first electric motor 3 for providing a suction of well fluid 8 containing the elements 2, such as debris or shavings, in through the inlet 6. The wireline cleaning tool 1 also comprises a chamber 9 fluidly connected with the tool inlet 6 for receiving the well fluid 8 and for collecting the elements 2 in the well fluid 8 by means of a filtering device 10 arranged for filtering the elements 2 from the well fluid 8 before the fluid passes through an outlet 11 of the tool 1. The wireline cleaning tool 1 further comprises a second electric motor 12 for rotating the milling or drilling head 5. The milling or drilling head 5 is used for cleaning a casing or well tubular metal structure from within by tearing or machining into stuck layers of precipiated elements 2, such as debris, or for machining into an obstacle in the well, such as a ball valve, and then the wireline cleaning tool 1 is able to collect these elements 2 and thus clean the well from these elements 2.

By having one motor 3 for driving the pump 7 and one motor 12 for rotating the milling or drilling head 5, the power can easily be optimised between the pump suction and the head rotation. The motors 3, 12 can thus be run independently of each other, which increases the flexibility of the tool substantially. The first electric motor 3 may be activated to drive the pump 7 while the second electric motor 12 is not activated or kept in idle position. When drilling or milling is carried out in a well, the outermost layer of an obstacle or debris may be harder than an inner layer, and in such case the milling or drilling head 5 needs more force in order to penetrate the harder layer while there is only few torn-off elements 2 in the well fluid 8, and thus the power is distributed to drive the second electric motor 12 rotating the milling or drilling head 5. As the milling or drilling head 5 penetrates the first harder layer, the power distribution can be changed so that the first motor 3 receives power or more power to increase the suction so as to collect more elements 2 in the chamber 9.

Furthermore, if the head rotation requires too much power, the suction ability of the pump 7 is substantially reduced, which creates the risk that particles or elements 2 torn off by the head 5 accumulate around the head 5, and the head 5 may get stuck and require even more power to rotate, if not totally stuck. In such case, the power distribution can be changed before the milling or drilling head 5 gets stuck so that the first electric motor 3 receives more power, and the second electric motor 12 receives less power. It is important to be able to change the power distribution because if, in the milling or drilling head is stuck, and all power was subsequently distributed to drive the pump 7, the maximum suction force is not always enough to release particles or elements 2 stuck around the head 5. By having two motors 3, 12, this balance between head rotation and pump suction can easily be measured and controlled as the current drawn from each motor 3, 12 can easily be measured in real time, and the adjustment of the power distribution between the motors 3, 12 can instantly be adjusted to match the optimal operating conditions.

As indicated by dotted lines in Fig. 1, the first electric motor 3 comprises a first shaft 14 connected with the pump 7, and the second motor 12 comprises a second shaft 15 connected with the milling or drilling head 5. The first shaft 14 and the second shaft 15 are coaxially arranged and rotate independently of each other around a centre tool axis L extending along the longitudinal extension of the wireline cleaning tool 1.

In Figs. 1 and 2, the first shaft 14 is tubular, and the second shaft 15 extends through the first shaft 14 so that the second shaft 15 is able to rotate the milling or drilling head 5. The wireline cleaning tool 1 further comprises a gear section 16 connected with the second shaft 15 for reducing a first rotational speed of the second shaft 15 to rotate the head 5 at a second rotational speed that is lower than the first rotational speed.

The second shaft 15 has a higher strength than the first shaft 14. The second shaft 15 is formed of several shaft sections 15a, 15b. Thus, the second shaft 15 extending from the second motor 12 rotating at the first rotational speed is a first second shaft section 15a, and the output shaft of the gear section 16 is a second second shaft section 15b rotating at the second rotational speed. Thus, the gear section 16 connects the shaft sections 15a, 15b. The gear section 16 may be a multi-stage gear. Both the first and second shafts 14, 15 may be formed of several shaft sections. As can be seen in Figs. 1, 2 and 5, the second motor 12 is arranged closest to the wireline, and the second shaft 15 extends through the first motor 3. The gear section 16 is arranged between the second motor 12 and the first motor 3, and the pump 7 abuts the first motor 3. The first shaft 14 is tubular and transfers rotation from the first motor 3 to rotation of the pump 7. The second shaft 15 extends through the first shaft 14.

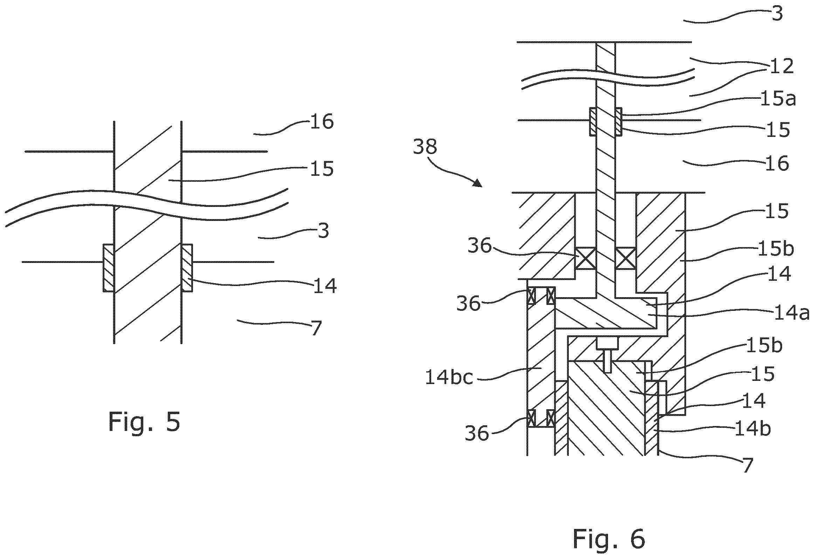

In order to make the second shaft 15 have a strength high enough to withstand and transfer the force to the milling or drilling head 5, the second shaft 15 needs to have a higher strength than the first shaft 14, which often entails that the second shaft 15 has a greater thickness than the first shaft 14. Thus, when the second shaft 15 extends through the first motor 3, the rotation and thus the power of the pump 7 may be reduced as the second shaft 15 takes up substantially more space that e.g. the first shaft 14. Therefore, in another embodiment shown in Fig. 6, the first motor 3 is arranged closest to the wireline 4, and the first shaft 14 extends through the second motor 12 so that the second shaft 15 does not have to extend through the first motor 3. In that way, the pump 7 is driven by a motor having its maximum power as it does not have to provide room for the second shaft 15. Thus, the gear section 16 is arranged between the second motor 12 and the pump 7, and the second motor 12 abuts the first motor 3. The first second shaft section 15a connecting the second motor 12 and the gear section 16 is tubular, and the second shaft 15 extends through the first second shaft section 15a. The first shaft 14 comprises a first first shaft section 14a and a second first shaft section 14b; the first first shaft section 14a is connected to the first motor 3, and the second first shaft section 14b is rotated by the first first shaft section 14a via a gear connection 38 transferring the rotation of the first first shaft section 14a to the second first shaft section 14b. The gear connection 38 transfers the rotation of the first first shaft section 14a to the second first shaft section 14b via a shaft connection 14bc. Thus, the first and second shafts 14, 15 have made a "cross-over" from the first condition where the first shaft 14 extends within the second shaft 15 to a second condition where the second shaft 15 extends within the first shaft 14. In this way, the first motor 3 does not lose power to provide space for the larger second shaft 15.

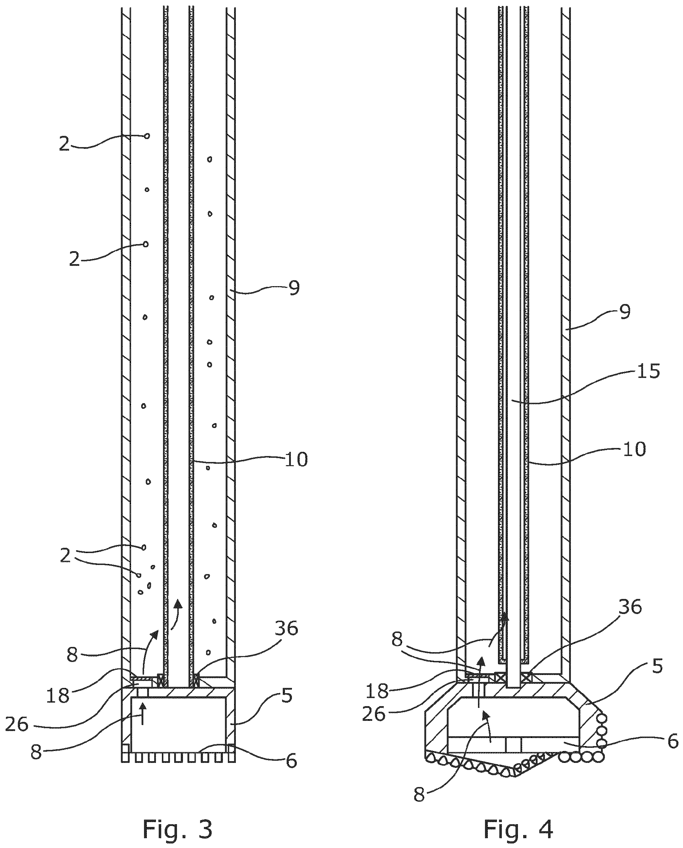

In Figs. 1 and 2, the filtering device 10 is arranged in the chamber 9. In another embodiment, the filtering device 10 is arranged in a connection between the chamber 9 and the pump 7. In Figs. 2 and 3, the filtering device 10 rotates in relation to the chamber 9, and the filtering device 10 is connected with the second shaft 15 in a first device end 41 (shown in Fig. 2), and at a second device end 42, the filtering device 10 is connected with the milling or drilling head 5. Thus, the filtering device 10 forms part of the second shaft 15, and the second shaft 15 and the filtering device 10 are combined, enabling a space-reducing design of the wireline cleaning tool 1. In Figs. 1 and 4, the filtering device 10 is stationary and connected with the chamber 9, which is also stationary and connected with the upper part of the tool 1. The filtering device 10 is tubular, and the second shaft 15 extends through the filtering device 10.

As shown in Figs. 3 and 4, the wireline cleaning tool 1 further comprises a valve 18, i.e. a one-way valve such as a check valve or a flapper valve, in fluid communication with a chamber inlet 26 of the chamber 9, preventing the fluid 8 from flowing back through the tool inlet 6 in the head 5. Thus, the chamber 9 is a collection chamber. In Fig. 1, a connection assembly 34 is arranged between the milling or drilling head 5 and the second shaft 15 so as to accumulate fluid 8 from several inlets in the head 5 and deliver one fluid output to enter the chamber 9. The tool 1 of Fig. 1 comprises several chambers 9 arranged in connection with each other to form a long collection chamber. The tool 1 of Fig. 1 has only one chamber 9 The wireline cleaning tool 1 comprises several bearings 36 arranged between rotating and stationary parts, such as between the rotating filtering device 10 and the stationary chamber 9 in Fig. 1, and between the rotating second shaft 15 and the stationary chamber 9 in Fig. 2. The pump 7 may be a centrifugal pump or a simiar pump providing a sufficinetly high suction force, and the centrifugal pump may include at least one of a mixed flow impeller, a radial flow impeller and a helico-axial impeller. The pump 7 comprises a pump inlet 30 in fluid communication with a chamber outlet 31 downstream of the filtering device 10. The chamber outlet 31 may have a one-way valve arranged in it.

As shown in Figs. 1 and 2, the wireline cleaning tool 1 further comprises a first sensor 19 for measuring a current demand of the first motor 3 and a second sensor 20 for measuring a current demand of the second motor 12. The wireline cleaning tool 1 also comprises a control unit 21 receiving input from the first sensor 19 and the second sensor 20 for controlling the power distribution to the first motor 3 and the second motor 12. The control unit 21 may also be arranged at a control box at surface. The control unit 21 may be preprogrammed to distribute the power in a certain pattern or control the power from certain thresholds.

The wireline cleaning tool 1 further comprises a compensator 25 for pressurising an inside of the tool 1 with a higher pressure than a surrounding pressure. The compensator 25 comprises a spring for providing the higher pressure in the tool 1 than the surrounding pressure. The compensator 25 comprises a compensator piston arranged in a compensator chamber, dividing the compensator chamber into a first compensator chamber part and a second compensator chamber part, where the first compensator chamber part is in fluid communication with the inside of the tool 1, and the second compensator chamber part is in fluid communication with an opening in the tool 1 for allowing well fluid 8 in and out of the second compensator chamber part. Thus, compensation fluid may flow past the gear section 16 in a channel, such as a centre channel in the gear section 16 or an annular channel circumferenting the gear section 16.

Fig. 2, shows a downhole tool string 100 comprising the wireline cleaning tool 1 and a driving unit 50, such as a downhole tractor 50. The driving unit 50 comprises a plurality of wheels 51 on projectable arms 52. The downhole tool string 100 comprises a second pump 37 driven by a third motor 27 for powering the driving unit/downhole tractor 50. The wireline cleaning tool 1 further comprises an electrical module 28.

Even though not shown, the rotating filtering device 10 may comprise at least one blade, which may be helical, on its outer face to aid the elements 2 accumulating in the chamber 9 towards the chamber end at the pump 7.

The wireline cleaning tool 1 is controlled by the following method where, first, the wireline cleaning tool 1 is lowered into a well, at least one of the first electric motor 3 and the second electric motor 12 is activated, a power demand, such as a current, in the first electric motor 3 and the second electric motor 12 is measured, and then the power is changed to one of the first electric motor 3 and the second electric motor 12 based on the measured power demand. If both motors 3, 12 are activated, the power to both motors 3, 12 may be changed. The first electric motor 3 is activated first in order to not hit the obstacle or debris in a stationary condition, which may result in some of the cutting bits 44 or abrasive inserts 45 being torn off, next the power is measured during the impact of the obstacle or debris in order to determine according to what pattern the power is to be controlled, and then the power distribution is controlled to match this pattern. If the power demand of one of the motors 3, 12 deviates from a predetermined threshold or limit, the power of the electric motor 3, 12 having a power demand exceeding the threshold or limit is adjusted upwards or downwards. The power consumption or demand of each electric motor 3, 12 is continuously measured throughout the operation so as to ensure that the tool 1 is running on the optimal parameters. Thus, the changing of the power distribution may follow a predetermined pattern based on the measured power demand.

By "fluid" or "well fluid" is meant any kind of fluid that may be present in oil or gas wells downhole, such as natural gas, oil, oil mud, crude oil, water, etc. By "gas" is meant any kind of gas composition present in a well, completion or open hole, and by "oil" is meant any kind of oil composition, such as crude oil, an oil-containing fluid, etc. Gas, oil and water fluids may thus all comprise other elements or substances than gas, oil and/or water, respectively.

By "casing" or "well tubular metal structure" is meant any kind of pipe, tubing, tubular, liner, string, etc., used downhole in relation to oil or natural gas production.

In the event that the tool is not submergible all the way into the casing, a downhole tractor can be used to push the tool all the way into position in the well. The downhole tractor may have projectable arms having wheels, wherein the wheels contact the inner surface of the casing for propelling the tractor and the tool forward in the casing. A downhole tractor is any kind of driving tool capable of pushing or pulling tools in a well downhole, such as a Well Tractor^{®}.

Although the invention has been described above in connection with preferred embodiments of the invention, it will be evident to a person skilled in the art that several modifications are conceivable without departing from the invention as defined by the following claims.

## Claims

1. A wireline cleaning tool (1) for collecting elements (2) such as debris, shavings or other elements from a well fluid in a well, comprising:
- a first electric motor (3) powered through a wireline (4),
- a milling or drilling head (5) comprising at least one inlet (6),
- a pump (7) rotated by the first electric motor for providing a suction of well fluid (8) containing elements, such as debris or shavings, in through the inlet,
- a chamber (9) fluidly connected with the inlet for receiving the well fluid and for collecting elements in the well fluid, and
- a filtering device (10) arranged for filtering the elements from the well fluid before the fluid passes through an outlet (11) of the tool,
wherein the wireline cleaning tool further comprises a second electric motor (12) for rotating the milling or drilling head.

2. A wireline cleaning tool according to claim 1, wherein the first electric motor comprises a first shaft (14) being connected with the pump, and the second electric motor comprises a second shaft (15) being connected with the milling or drilling head.

3. A wireline cleaning tool according to claim 2, wherein the first shaft and the second shaft are coaxially arranged and rotate independently of each other.

4. A wireline cleaning tool according to claim 2 or 3, further comprising a gear section (16) connected with the second shaft for reducing a first rotational speed of the second shaft for rotating the head at a second rotational speed being lower than the first rotational speed.

5. A wireline cleaning tool according to any of claims 2-4, wherein the first motor (3) is arranged closest to the wireline, and the first shaft (14) extends through the second motor (12).

6. A wireline cleaning tool according to claim 5, wherein the first shaft comprises a first first shaft section (14a) and a second first shaft section (14b), the first first shaft section being connected to the first motor. and the second first shaft section being rotated by the first first shaft section via a gear connection (38) transferring the rotation of the first first shaft section to the second first shaft section.

7. A wireline cleaning tool according to any of claims 4-6, wherein the second shaft (15) comprises a first second shaft section (15a) extending from the second motor (12) rotating at the first rotational speed and a second second shaft section (15b) extending as output of the gear section (16) rotating at the second rotational speed.

8. A wireline cleaning tool according to any of claims 2-4, wherein the second motor (12) is arranged closest to the wireline, and the second shaft (15) extends through the first motor (3).

9. A wireline cleaning tool according to claim 8, wherein the first shaft is tubular, and the second shaft extends through the first shaft.

10. A wireline cleaning tool according to any of the preceding claims, further comprising a first sensor (19) for measuring a current demand of the first motor and a second sensor (20) for measuring a current demand of the second motor.

11. A wireline cleaning tool according to claim 10, further comprising a control unit (21) receiving input from the first sensor and the second sensor for controlling the power distribution to the first motor and the second motor.

12. A wireline cleaning tool according to any of the preceding claims, wherein the pump comprises a pump inlet (30) in fluid communication with a chamber outlet (31) downstream of the filtering device.

13. A downhole tool string (100) comprising the wireline cleaning tool according to any of claims 1-12 and a driving unit/downhole tractor (50).

14. A method of controlling a wireline cleaning tool according to any of claims 1-12, comprising:
- lowering the wireline cleaning tool into a well,
- activating at least one of the first electric motor and the second electric motor,
- measuring a power demand, such as a current, in the first electric motor and the second electric motor, and
- changing the power to one of the first electric motor and the second electric motor based on the measured power demand.

15. A method according to claim 14, further comprising changing of the power distribution in a predetermined pattern based on the measured power demand.
